# EUROPEAN PATENT SPECIFICATION

(11) **EP 4 307 456 B1**
(45) Date of publication and mention of the grant of the patent: **11.02.2026**
(21) Application number: 22776169.9
(22) Date of filing: 25.03.2022
(51) Int. Cl.: H01M 50/516, H01M 50/503, H01M 50/213, H01M 50/167, H01M 50/559, H01M 50/249, B23K 26/21, B23K 101/38, H01M 50/507

(54) **BATTERY PACK AND VEHICLE INCLUDING THE SAME**
BATTERIENPACK UND FAHRZEUG UMFASSEND EIN SOLCHEN BATTERIENPACK
BLOC-BATTERIE ET VÉHICULE INCLUANT CELUI-CI

(30) Priority: 26.03.2021 KR 20210039999
(43) Date of publication of application: 17.01.2024
(73) Proprietor: LG ENERGY SOLUTION, LTD., Seoul 07335 (KR)
(72) Inventor: JUNG, In-Hyuk, Daejeon 34122 (KR); YANG, Jin-Oh, Daejeon 34122 (KR); OH, Kwang-Keun, Daejeon 34122 (KR); CHOI, Hae-Won, Daejeon 34122 (KR)
(74) Representative: Goddar, Heinz J.
(86) International application number: PCT/KR2022/004263
(87) International publication number: WO 2022/203469

(56) References cited:
- EP-A1- 3 654 411
- CN-A- 110 770 958
- CN-U- 206 912 519
- FR-A1- 3 048 906
- KR-A- 20090 095 548
- KR-A- 20170 116 123
- KR-A- 20180 057 362
- KR-A- 20180 129 115
- US-A1- 2018 269 459
- US-A1- 2020 075 913

## Description

### TECHNICAL FIELD

The present disclosure relates to a battery pack including a welding portion having an improved structure, and a vehicle including the same. More specifically, the present disclosure relates to a battery pack including a welding portion having an improved structure capable of preventing damage to battery cells caused by penetration of a base material due to overlap of a welding line in welding a bus bar and terminals of the battery cells in order to electrically connect a plurality of battery cells, and a vehicle including the same.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such a secondary battery is attracting attention as a new energy source to improve eco-friendliness and energy efficiency in that it has not only a primary advantage of dramatically reducing the use of fossil fuels, but also no by-products generated from the use of energy.

Secondary batteries widely used at the preset include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series/parallel to configure a battery module and/or a battery pack, a bus bar may be used to electrically connect the plurality of battery cells. In this case, after the bus bars are respectively positioned on the positive electrode terminal and the negative electrode terminal of the battery cell, the components may be coupled to each other through laser welding. In order to maximize the coupling force by laser welding in a narrow space, it is necessary to form a laser welding line over a wide area rather than in one direction.

In addition, in the case of forming the laser welding line over a wide area, it is necessary to prevent penetration of the base material at a specific point due to overlap of the laser welding line.

CN 110 770 958 A relates to a rechargeable battery pack unit encompassing at least one rechargeable battery cell, which includes a cell pole, and encompassing a current collector, the cell pole being integrally joined to the current collector in a connecting area.

FR 3 048 906 A1 relates to a welding method between a conductive element and a battery pole of a small battery.

US 2020/075919 A1 relates to a battery assembly for an electrified vehicle and a corresponding method. An exemplary battery assembly includes a battery cell terminal/busbar joint with one or more Z-shaped weld beads.

US 2018/269459 A1 relates to an electric storage module with built-in electric storage cell, a manufacturing method for an electric storage module, a metal joined body, and a manufacturing method for metal joined body.

EP 3 654 411 A1 relates to a battery module having improved weldability of an electric connection structure, and a battery pack and a vehicle, which include the battery module.

### DISCLOSURE

### Technical Problem

The present disclosure has been devised in consideration of the above-described problems, and therefore the present disclosure is directed to maximizing the coupling force between components during laser welding and at the same time to preventing penetration of the base material caused by concentration of energy at a specific point.

However, technical problems to be solved by the present disclosure are not limited to the above-described problems, and other problems not mentioned herein may be clearly understood by those skilled in the art from the following description of the present disclosure.

### Technical Solution

A battery pack according to an embodiment of the present disclosure for solving the above-described problem includes a plurality of battery cells; a housing accommodating the plurality of battery cells; a plurality of bus bars electrically connecting the plurality of battery cells; and a first welding portion for coupling a first electrode terminal provided in each of the plurality of battery cells to the bus bar and a second welding portion for coupling a second electrode terminal provided in each of the plurality of battery cells to the bus bar, wherein at least one of the first welding portion and the second welding portion includes a region in which a laser welding line formed on the bus bar proceeds in a direction opposite to an extension direction of the welding portion.

The welding portion has an overlap avoidance region for preventing a region in which the laser welding line is overlapped.

The bus bar may be disposed on the upper portion of the housing and may electrically connect a plurality of battery cells exposed to the upper portion of the housing.

The bus bar may include at least one first terminal connection portion coupled to a first electrode terminal of a first battery cell among the plurality of battery cells; and at least one second terminal connection portion coupled to a second electrode terminal of a second battery cell among the plurality of battery cells.

Each of the plurality of battery cells may include an electrode assembly; a battery can accommodating the electrode assembly through an opening formed thereabove and electrically connected to the electrode assembly; and a top cap sealing the opening and electrically connected to the electrode assembly.

The first terminal connection portion may be coupled to the top cap, and the second terminal connection portion may be electrically coupled to the battery can.

The battery can may include a beading portion formed by press-fitting the circumference of the battery can; and a crimping portion formed on top of the beading portion, extending and bent so as to surround an outer circumferential surface of the top cap and cover a portion of an upper surface of the top cap.

The second terminal connection portion may be coupled to the upper surface of the crimping portion.

Each of the plurality of battery cells may include a metal washer coupled to the upper surface of the crimping portion and having a width greater than that of the upper surface of the crimping portion.

The second terminal connection portion may be coupled to the metal washer.

Each of the plurality of battery cells may include an electrode assembly; a battery can having an opening formed therebelow and a closed portion located on the opposite side of the opening, accommodating the electrode assembly through the opening, and electrically connected to the electrode assembly; a top cap sealing the opening of the battery can; and a cell terminal exposed to the outside of the battery can through the closed portion and electrically connected to the electrode assembly.

The first terminal connection portion may be coupled to the cell terminal, and the second terminal connection portion may be coupled to the closed portion.

Meanwhile, a vehicle according to an embodiment of the present disclosure for solving the above-described problem includes the battery pack according to an embodiment of the present disclosure as described above.

### Advantageous Effects

According to one aspect of the present disclosure, it is possible to maximize the coupling force between components during laser welding, and at the same time, it is possible to prevent penetration of the base material caused by concentration of energy at a specific point in the welding portion where laser welding is performed.

However, advantageous effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure should not be construed as being limited to the drawings.
FIG. 1 is a view illustrating a battery pack according to an embodiment of the present disclosure.
FIG. 2 is an enlarged view of region A of the battery pack shown in FIG. 1.
FIG. 3 is a cross-sectional view illustrating a battery cell applied to a battery pack according to an embodiment of the present disclosure.
FIG. 4 is a view illustrating a specific shape of the welding portion shown in FIG. 2.
FIG. 5 is a view illustrating a structure which is not in accordance with the claims, in which laser welding lines are overlapped, unlike the shape of the welding portion shown in FIG. 4.
FIG. 6 a view illustrating a modified example of the shape of the welding portion shown in FIG. 4.
FIG. 7 is an enlarged view illustrating a portion of a battery pack according to another embodiment of the present disclosure.
FIG. 8 is view illustrating a battery cell applied to a battery pack according to another embodiment of the present disclosure.
FIG. 9 is an enlarged view illustrating a portion of a battery pack according to still another embodiment of the present disclosure.
FIG. 10 is a view illustrating a battery cell applied to a battery pack according to still another embodiment of the present disclosure.
FIG. 11 is a view illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

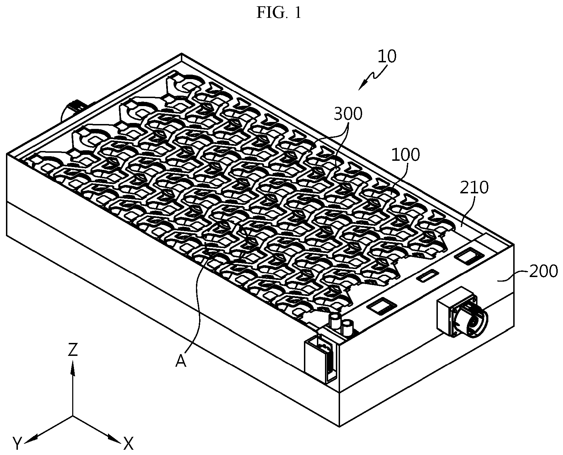

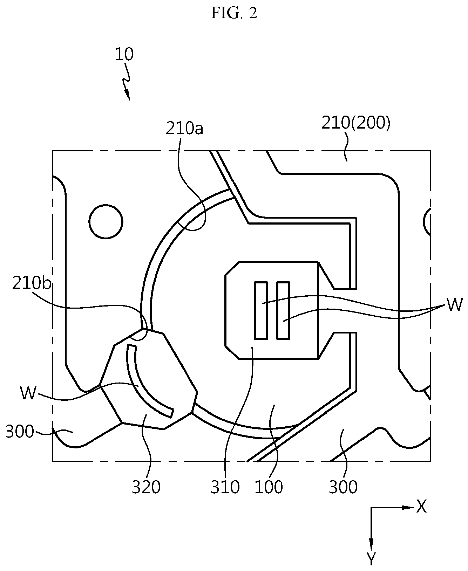

Referring to FIGS. 1 and 2, a battery pack 10 according to an embodiment of the present disclosure includes a plurality of battery cells 100, a housing 200 accommodating the plurality of battery cells 100, a plurality of bus bars 300 electrically connecting the plurality of battery cells 100, and a welding portion W coupling electrode terminals T1, T2 provided in the battery cells 100 and the bus bar 300.

Referring to FIGS. 1 to 3, a cylindrical battery cell may be applied as the battery cell 100. In this case, the battery cell 100 includes an electrode assembly 110, a battery can 120, and a top cap 130. The battery cell 100 may further include a gasket 140 in addition to the above-described components.

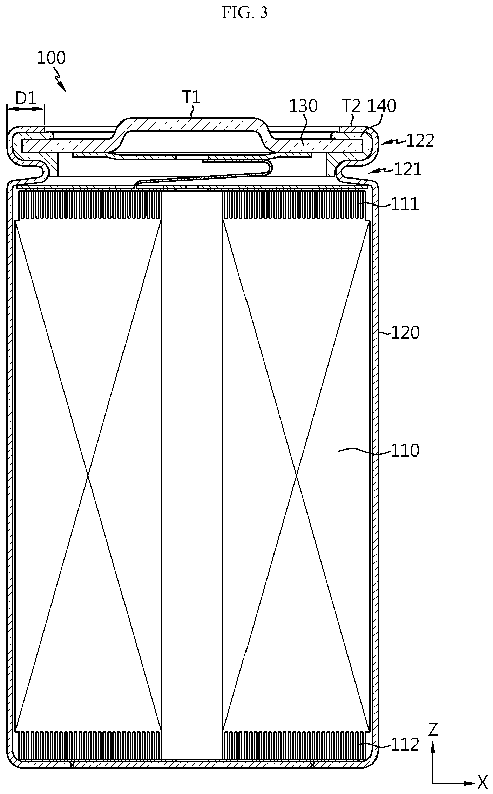

Referring to FIG. 3, the electrode assembly 110 includes a first electrode plate having a first polarity, a second electrode plate having a second polarity, and a separator interposed between the first electrode plate and the second electrode plate. The electrode assembly 110 may have a jelly-roll shape. That is, the electrode assembly 110 may be manufactured by winding a stack formed by sequentially stacking the first electrode plate, the separator, and the second electrode plate at least once. In this case, a separator may be provided on the outer circumferential surface of the electrode assembly 110 for insulation from the battery can 120. The first electrode plate is a positive electrode plate or a negative electrode plate, and the second electrode plate corresponds to an electrode plate having a polarity opposite to that of the first electrode plate.

The first electrode plate includes a first electrode current collector and a first electrode active material coated on one or both surfaces of the first electrode current collector. An uncoated portion to which the first electrode active material is not applied is disposed at one end of the first electrode current collector in the width direction (a direction parallel to the Z-axis). The uncoated portion functions as a first electrode tab 111. The first electrode tab 111 is provided at the top of the electrode assembly 110 accommodated in the battery can 120 in the height direction (a direction parallel to the Z-axis).

The second electrode plate includes a second electrode current collector and a second electrode active material coated on one or both surfaces of the second electrode current collector. An uncoated portion to which the second electrode active material is not applied is disposed at the other end of the second electrode current collector in the width direction (a direction parallel to the Z-axis). The uncoated portion functions as a second electrode tab 112. The second electrode tab 112 is provided at the bottom of the electrode assembly 110 accommodated in the battery can 120 in the height direction (a direction parallel to the Z-axis).

The battery can 120 is a cylindrical container having an opening formed at the top thereof, and is made of a metal material having conductivity. The battery can 120 accommodates the electrode assembly 110 through the opening formed at the top thereof, and also accommodates an electrolyte.

The battery can 120 is electrically connected to the second electrode tab 112 of the electrode assembly 110. Therefore, the battery can 120 has the same polarity as that of the second electrode tab 112. Accordingly, the battery can 120 may function as a second electrode terminal T2 and may be electrically coupled to the second terminal connection portion 320 of the bus bar 300.

The battery can 120 may include a beading portion 121 formed adjacent to the opening and a crimping portion 122. The beading portion 121 is formed at the top of the electrode assembly 110. The beading portion 121 is formed by press-fitting the outer circumferential surface of the battery can 120. The beading portion 121 may prevent the electrode assembly 110 having a size corresponding to the width of the battery can 120 from coming out through the upper opening of the battery can 120, and may function as a support portion on which the top cap 130 is seated.

The crimping portion 122 is formed at the top of the beading portion 121. The crimping portion 122 surrounds the outer circumferential surface of the top cap 130 disposed on the beading portion 121, and has a shape extending and bent to cover a portion of the upper surface of the top cap 130.

The top cap 130 is a component made of a metal material having conductivity, and covers the upper opening of the battery can 120. The top cap 130 is electrically connected to the first electrode tab 111 of the electrode assembly 110 and is electrically insulated from the battery can 120. Accordingly, the top cap 130 may function as the first electrode terminal T1 and may be coupled to the first terminal connection portion 310 of the bus bar 300.

The top cap 130 is seated on the beading portion 121 formed in the battery can 120 and is fixed by the crimping portion 122. Between the top cap 130 and the crimping portion 122 of the battery can 120, a gasket 140 may be interposed to ensure airtightness of the battery can 120 and to electrically insulate the battery can 120 from the top cap 130.

The top cap 130 may have a shape in which a central portion thereof protrudes upward. The protruding central portion of the top cap 130 may protrude higher than the upper end of the battery can 120 to facilitate contact with the bus bar 300 (refer to FIGS. 1 and 2).

Meanwhile, as described above, in the cylindrical battery cell 100, the top cap 130 having a first polarity may function as the first electrode terminal T1, and an upper end of the crimping portion 122 of the battery can 120 having a second polarity may function as the second electrode terminal T2. That is, the battery cell 100 applied to the battery pack 10 according to an embodiment of the present disclosure has a structure in which both the first electrode terminal T1 having the first polarity and the second electrode terminal T2 having the second polarity are disposed in the same direction.

Referring to FIGS. 1 and 2, the housing 200 accommodates a plurality of battery cells 100 and may ensure rigidity of the battery pack 10. The housing 200 includes a cell support portion 210 partially covering an upper portion of the battery cell 100 so that the battery cells 100 accommodated in the housing 200 do not escape upward.

The cell support portion 210 includes a plurality of cell exposure holes 210a formed so that a portion of the upper surface of the battery cell 100 is exposed to the outside. The central portion of the top cap 130, that is, the first electrode terminal T1 is exposed upward from the housing 200 through the cell exposure hole 210a to be coupled to the bus bar 300.

In addition, the cell support portion 210 may include a terminal exposure hole 210b formed at one side of the cell exposure hole 210a. The upper end of the crimping portion 122 of the battery can 120, that is, the second electrode terminal T2 is exposed from the housing 200 through the terminal exposure hole 210b to be coupled to the bus bar 300.

Referring to FIGS. 1 and 2, the bus bar 300 is coupled to a plurality of battery cells 100 at the top of the battery pack 10 to electrically connect the plurality of battery cells 100 adjacent to each other. The bus bar 300 includes at least one first terminal connection portion 310 and at least one second terminal connection portion 320.

The first terminal connection portion 310 is coupled to the first electrode terminal T1 of the first battery cell among the plurality of battery cells 100. The second terminal connection portion 320 is coupled to the second electrode terminal T2 of the second battery cell adjacent to the first battery cell among the plurality of battery cells 100. That is, the first terminal connection portion 310 is coupled to the top cap 130 of the first battery cell exposed upward through the cell exposure hole 210a. Also, the second terminal connection portion 320 is coupled to the upper end of the crimping portion 122 of the second battery cell exposed upward through the terminal exposure hole 210b. According to this electrical connection method, the first battery cell and the second battery cell may be connected to each other in series.

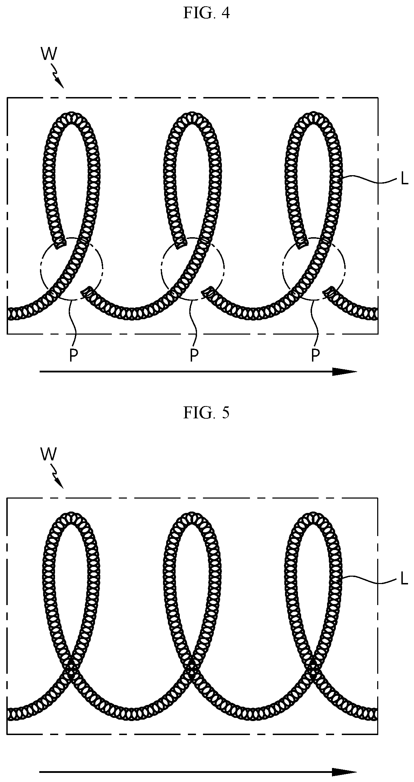

Referring to FIGS. 2 and 4, the welding portion W is formed by laser welding for coupling the electrode terminals T1, T2 provided in the battery cell 100 and the bus bar 300. Therefore, the welding portion W includes a laser welding line L formed in a predetermined pattern on the first terminal connection portion 310 disposed on the first electrode terminal T1 of the battery cell 100 and the second terminal connection portion 320 disposed on the second electrode terminal T2.

Due to the formation of the welding portion W including the laser welding line L, the first electrode terminal T1 and the first terminal connection portion 310 are coupled to each other, and similarly, the second electrode terminal T2 and the second terminal connection portion 320 are coupled to each other.

Meanwhile, as shown in FIG. 4, the welding portion W includes a region in which the laser welding line L formed on the first terminal connection portion 310 and/or the second terminal connection portion 320 of the bus bar 300 proceeds in a direction opposite to the extension direction (an arrow direction in FIG. 4) of the welding portion W. That is, the welding portion W having a welding structure of the present disclosure has a section in which a proceeding direction of the welding line L forming the welding portion W is partially opposite to the overall extension direction (an arrow direction in FIG. 4) of the welding portion W. The laser welding line L, for example, may have a shape extending from one side (left side when viewed with reference to FIG. 4) in the longitudinal direction of the welding portion W toward the other side (right side when viewed with reference to FIG. 4) in an approximately arc.

This structure of the welding portion W may minimize the time required for welding while improving coupling force between components due to an increase in area where the welding line L is formed, as compared with a case where the laser welding line L proceeds only in the same direction as the overall extension direction of the welding portion W to form the welding portion W.

Meanwhile, a welding portion W (hereinafter referred to as a first welding portion) coupling the first electrode terminal T1 and the first terminal connection portion 310 and/or a welding portion W (hereinafter referred to as a second welding portion) coupling the second electrode terminal T2 and the second terminal connection portion 320 may include an overlap avoidance region P for preventing a region in which the laser welding line L is overlapped. In the overlap avoidance region P, the laser welding line L may have a partially discontinuous shape so as not to pass through the same point twice or more.

As shown in FIG. 5, which shows an embodiment which is not in accordance with the claims, when there is a region in which the laser welding line L temporarily proceeds in a direction opposite to the overall extension direction (arrow direction in FIG. 5) of the welding portion W, a region in which the laser welding line L is overlapped may be present.

The reason that the welding portion W according to the present disclosure has the overlap avoidance region P is to prevent issues such as damage to components due to penetration of the base material or leakage of the battery cell 100, which may be caused by repeatedly applying energy for laser welding to a specific region due to the overlap of the laser welding line L.

In the cylindrical battery cell, a flat portion formed approximately parallel to the ground (a surface parallel to the X-Y plane) may be provided on the upper end of the crimping portion 122 of the battery can 120, wherein the second terminal connection portion 320 of the bus bar 300 may be coupled on this flat portion by welding. The flat portion provided on the upper end of the crimping portion 122 may be used as the second electrode terminal T2, and the flat portion has a very small width D1 compared to a flat portion formed approximately parallel to the ground (a surface parallel to the X-Y plane) on the upper end of the top cap 130 used as the first electrode terminal T1. Here, the width of the flat portion formed on the top cap 130 and the width of the crimping portion 122 mean a length extending along a direction approximately parallel to the radial direction of the battery can 120.

Therefore, in order to couple the second electrode terminal T2 to the second terminal connection portion 320 of the bus bar 300, intensive welding needs to be performed in a narrow space. Accordingly, when a conventional welding method is applied, it is highly likely that penetration of the battery can 120 occurs at the upper end of the crimping portion 122 of the battery can 120 coupled to the second terminal connection portion 320 of the bus bar 300. Moreover, the thickness of the battery can 120 may be limited in consideration of ease of molding and energy density, and thus may have a thinner thickness compared to the top cap 130. In this manner, when the battery can 120 is formed thinner than the top cap 130, there is a high possibility that penetration occurs during welding in the crimping portion 122, which is a portion of the battery can 120.

In order to prevent the penetration of the battery can 120, there is a huge need for the welding method of the present disclosure as described above to be applied particularly to the coupling between the second electrode terminal T2 and the bus bar 300. That is, the structure of the welding portion W having a section in which the welding line L reverses the overall proceeding direction of the welding portion W may be applied to only the second welding portion of both the first welding portion and the second welding portion. Likewise, a structure of the welding portion W in which the welding line L is configured to have a section opposite to the overall proceeding direction of the welding portion W and to have an overlap avoidance region P may be applied to only the second welding portion of both the first welding portion and the second welding portion.

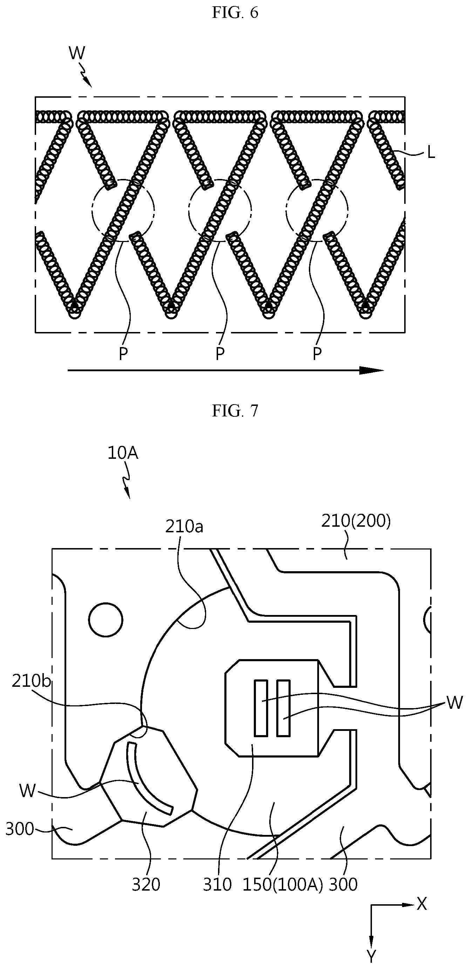

Meanwhile, as shown in FIG. 4, the laser welding line L may proceed in an approximately arc shape to form the welding portion W, but, alternatively, as shown in FIG. 6, the laser welding line L may proceed in an approximately ribbon shape by repeating progress in a straight line and direction change to form the welding portion W.

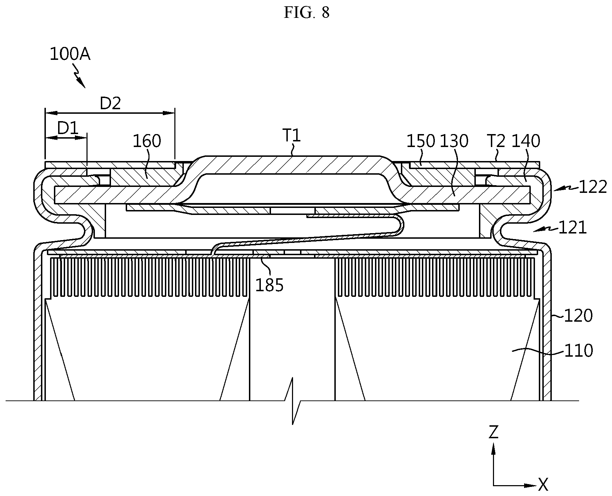

Next, a battery pack 10A according to another embodiment of the present disclosure will be described with reference to FIGS. 7 and 8. In the battery pack 10A according to another embodiment of the present disclosure, as compared to the battery pack 10 according to an embodiment of the present disclosure described above, there is a difference in that some components are further added in the structure of the battery cell 100A, and components other than the added components are substantially the same. Therefore, in describing the battery pack 10A according to another embodiment of the present disclosure, the components added to the battery cell 100A will be mainly described, and a detailed description of components that are not different from those in the previous embodiment will be omitted.

Referring to FIGS. 7 and 8, the battery cell 100A applied to the battery pack 10A according to another embodiment of the present disclosure further includes a metal washer 150 having a width D2 greater than a width D1 of the upper surface of the crimping portion 122 of the battery can 120.

The metal washer 150 is coupled to the upper surface of the crimping portion 122 formed in the battery cell 100A to function as the second electrode terminal T2 instead of the crimping portion 122. The metal washer 150 has a shape extending from the crimping portion 122 toward the center of the top cap 130. The reason that the metal washer 150 has a width D2 greater than the width D1 of the upper surface of the crimping portion 122 is to enlarge a coupling area between the second terminal connection portion 320 of the bus bar 300 and the metal washer 150. In this way, as the coupling area between the second terminal connection portion 320 and the metal washer 150 is enlarged, a welding process may be smoothly performed, fastening force between two components may be improved, and electrical resistance at the coupling portion may be reduced. In manufacturing the battery pack 10A by electrically connecting a plurality of battery cells 100A having such a structure, the welding structure of the present disclosure as described above may be applied to a welding portion (first welding portion) W for coupling the top cap 130 functioning as the first electrode terminal T1 to the first terminal connection portion 310 and/or a welding portion (second welding portion) W for coupling the metal washer 150 functioning as the second electrode terminal T2 to the second terminal connection portion 320.

Meanwhile, the battery cell 100A may further include an insulating washer 160 interposed between the top cap 130 and the metal washer 150. The insulating washer 160 is made of a material having insulating properties. In the present disclosure, since the top cap 130 functions as the first electrode terminal T1 having a first polarity and the metal washer 150 functions as the second electrode terminal T2 having a second polarity opposite to the first polarity, the top cap 130 and the metal washer 150 should maintain an electrically insulating state. Therefore, it may be advantageous that the insulating washer 160 is applied to stably maintain such an insulating state.

The insulating washer 160 is interposed between the lower surface of the metal washer 150 and the top cap 130. As described above, the metal washer 150 has a width D2 greater than the width D1 of the upper surface of the crimping portion 122 and has a shape extending in a direction from the crimping portion 122 toward the center of the top cap 130. Therefore, the insulating washer 160 may have a shape extending to cover the inner surface of the hole formed at the center of the metal washer 150 in order to prevent contact between the inner surface of the hole formed at the center of the metal washer 150 and the protrusion formed at the center of the top cap 130.

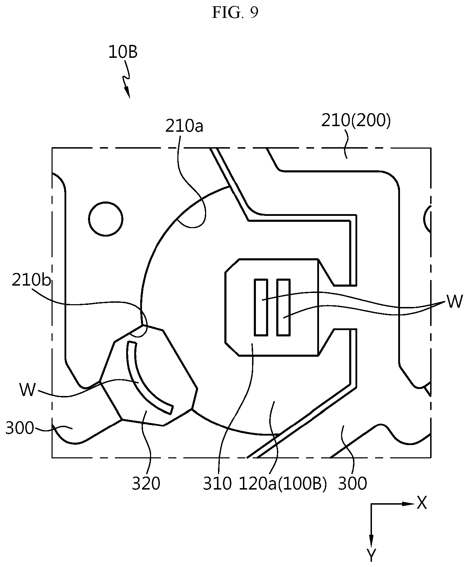

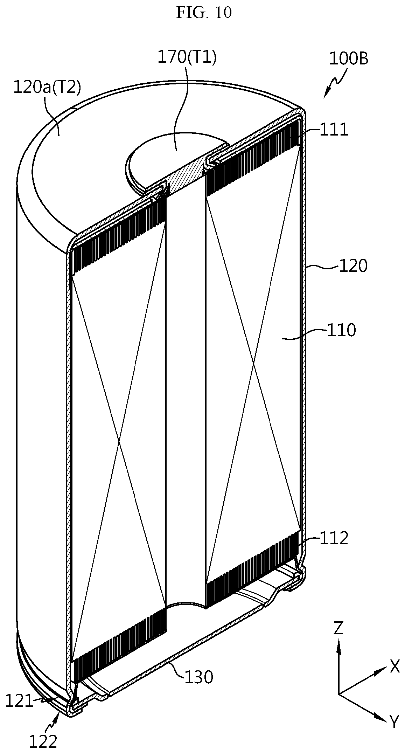

Next, a battery pack 10B according to still another embodiment of the present disclosure will be described with reference to FIGS. 9 and 10. The battery pack 10B includes a plurality of electrically connected battery cells 100B. In the battery pack 10B according to still another embodiment of the present disclosure, as compared to the battery pack 10 according to an embodiment of the present disclosure described above, there is a difference in some structure of the battery cell 100B, and the other elements are substantially the same. Therefore, in describing the battery pack 10B according to still another embodiment of the present disclosure, only the parts having differences will be intensively described, and a description of the parts substantially the same as those of the battery pack 10 described above will be omitted.

The battery cell 100B includes an electrode assembly 110, a battery can 120, a top cap 130, and a cell terminal 170. The battery can 120 includes an opening formed below and a closed portion 120a located at the opposite side of the opening. The battery can 120 accommodates the electrode assembly 110 through the opening and is electrically connected to the electrode assembly 110. The battery can 120 may be electrically connected to the second electrode tab 112. In this case, the electrical connection between the second electrode tab 112 and the battery can 120 may be made, for example, through a current collector plate.

The top cap 130 is configured to seal the opening of the battery can 120. In the battery cell 100B, the top cap 130 may not be electrically connected to the electrode assembly 110 unlike in the previous embodiment. In this case, the top cap 130 functions only as a component for sealing the opening of the battery can 120, but does not function as an electrode terminal.

The cell terminal 170 is exposed to the outside of the battery can 120 through the closed portion 120a and is electrically connected to the electrode assembly 110 inside the battery can 120. The cell terminal 170 may be directly or indirectly coupled to the first electrode tab 111 of the electrode assembly 110. The battery cell 100B may further include a gasket interposed between a through hole formed in the closed portion 120a and the cell terminal 170 for electrical insulation between the cell terminal 170 having a first polarity and the closed portion 120a of the battery can 120 having a second polarity.

In the battery cell 100B having this structure, the upper surface of the cell terminal 170 exposed to the outside of the battery can 120 may function as the first electrode terminal T1 and the outer surface of the closed portion 120a of the battery can 120 may function as the second electrode terminal T2. In manufacturing the battery pack 10B by electrically connecting the plurality of battery cells 100B, the first terminal connection portion 310 of the bus bar 300 may be coupled to the cell terminal 170 (first electrode terminal) and the second terminal connection portion 320 of the bus bar 300 may be coupled to the closed portion 120a (second electrode terminal) of the battery can 120. Meanwhile, the welding structure of the present disclosure as described above may be applied to the welding portion (first welding portion) W coupling the first terminal connection portion 310 to the cell terminal 170 (first electrode terminal) and/or the welding portion (second welding portion) W coupling the second terminal connection portion 320 to the closed portion 120a.

In manufacturing the battery pack 10B, in order to prevent the penetration of the battery can 120, there is a huge need for the welding method of the present disclosure as described above to be applied particularly to the coupling between the second electrode terminal T2 and the bus bar 300. That is, the structure of the welding portion W having a section in which the welding line L reverses the overall proceeding direction of the welding portion W may be applied to only the second welding portion of both the first welding portion and the second welding portion. Likewise, a structure of the welding portion W in which the welding line L is configured to have a section opposite to the overall proceeding direction of the welding portion W and to have an overlap avoidance region P may be applied to only the second welding portion of both the first welding portion and the second welding portion.

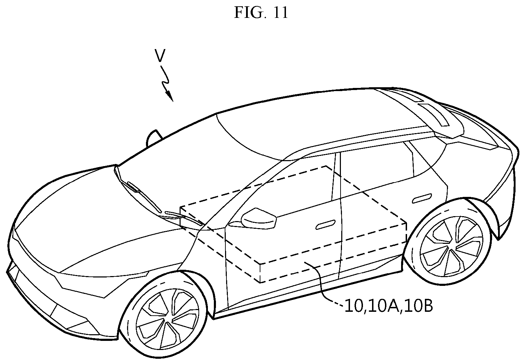

Meanwhile, referring to FIG. 11, a vehicle V according to an embodiment of the present disclosure includes the battery packs 10, 10A, 10B according to the present disclosure as described above. The vehicle according to an embodiment of the present disclosure may be, for example, an electric vehicle, and may be operated by receiving power from the battery packs 10, 10A, 10B according to the present disclosure.

### <Reference Signs>

10, 10A, 10B: battery pack
100, 100A, 100B: battery cell
110: electrode assembly
111: first electrode tab
112: second electrode tab
120: battery can
120a: closed portion
121: beading portion
122: crimping portion
130: top cap
140: gasket
T1: first electrode terminal
T2: second electrode terminal
150: metal washer
160: insulating washer
170: cell terminal
D1: width of crimping portion
D2: width of metal washer
200: housing
210: cell support portion
210a: cell exposure hole
210b: terminal exposure hole
300: bus bar
310: first terminal connection portion
320: second terminal connection portion
W: welding portion
L: laser welding line
P: overlap avoidance region

## Claims

1. A battery pack (10, 10A, 10B) comprising:
a plurality of battery cells (100, 100A, 100B);
a housing (200) accommodating the plurality of battery cells (100, 100A, 100B);
a plurality of bus bars (300) electrically connecting the plurality of battery cells (100, 100A, 100B); and
a first welding portion (W) for coupling a first electrode terminal (T1) provided in each of the plurality of battery cells (100, 100A, 100B) to the bus bar (300) and a second welding portion (W) for coupling a second electrode terminal (T2) provided in each of the plurality of battery cells (100, 100A, 100B) to the bus bar (300),
wherein at least one of the first welding portion (W) and the second welding portion (W) comprises a region in which a laser welding line (L) formed on the bus bar (300) proceeds in a direction opposite to an extension direction of the welding portion (W),
wherein the welding portion (W) has an overlap avoidance region (P) for preventing a region in which the laser welding line (L) formed in a predetermined pattern is overlapped, wherein in the overlap avoidance region (P), the laser welding line (L) has a partially discontinuous shape so as not to pass through the same point twice or more.

2. The battery pack (10, 10A, 10B) according to claim 1,
wherein the bus bar (300) is disposed on the upper portion of the housing (200) and electrically connects a plurality of battery cells (100, 100A, 100B) exposed to the upper portion of the housing (200).

3. The battery pack (10, 10A, 10B) according to claim 1,
wherein the bus bar (300) comprises:
at least one first terminal connection portion (310) coupled to a first electrode terminal (T1) of a first battery cell (100, 100A, 100B) among the plurality of battery cells (100, 100A, 100B); and
at least one second terminal connection portion (320) coupled to a second electrode terminal (T2) of a second battery cell (100, 100A, 100B) among the plurality of battery cells (100, 100A, 100B).

4. The battery pack (10, 10A, 10B) according to claim 3,
wherein each of the plurality of battery cells (100, 100A, 100B) comprises;
an electrode assembly (110);
a battery can (120) accommodating the electrode assembly (110) through an opening formed thereabove and electrically connected to the electrode assembly (110); and
a top cap (130) sealing the opening and electrically connected to the electrode assembly (110).

5. The battery pack (10, 10A, 10B) according to claim 4,
wherein the first terminal connection portion (310) is coupled to the top cap (130), and
the second terminal connection portion (320) is electrically coupled to the battery can (120).

6. The battery pack (10, 10A, 10B) according to claim 5,
wherein the battery can (120) comprises:
a beading portion (121) formed by press-fitting the circumference of the battery can (120); and
a crimping portion (122) formed on top of the beading portion (121), extending and bent so as to surround an outer circumferential surface of the top cap (130) and cover a portion of an upper surface of the top cap (130).

7. The battery pack (10, 10A, 10B) according to claim 6,
wherein the second terminal connection portion (320) is coupled to the upper surface of the crimping portion (122).

8. The battery pack (10, 10A, 10B) according to claim 6,
wherein each of the plurality of battery cells (100, 100A, 100B) comprises a metal washer (150) coupled to the upper surface of the crimping portion (122) and having a width greater than that of the upper surface of the crimping portion (122).

9. The battery pack (10, 10A, 10B) according to claim 8,
wherein the second terminal connection portion (320) is coupled to the metal washer (150).

10. The battery pack (10, 10A, 10B) according to claim 3,
wherein each of the plurality of battery cells (100, 100A, 100B) comprises:
an electrode assembly (110);
a battery can (120) having an opening formed therebelow and a closed portion (120a) located on the opposite side of the opening, accommodating the electrode assembly (110) through the opening, and electrically connected to the electrode assembly (110);
a top cap (130) sealing the opening of the battery can (120); and
a cell terminal (170) exposed to the outside of the battery can (120) through the closed portion (120a) and electrically connected to the electrode assembly (110).

11. The battery pack (10, 10A, 10B) according to claim 10,
wherein the first terminal connection portion (310) is coupled to the cell terminal (170), and the second terminal connection (320) portion is coupled to the closed portion (120a).

12. A vehicle (V) comprising the battery pack (10, 10A, 10B) according to any one of claims 1 to 11.

## Patentansprüche

1. Ein Batteriepack (10, 10A, 10B), umfassend
eine Vielzahl von Batteriezellen (100, 100A, 100B);
ein Gehäuse (200), das die Vielzahl von Batteriezellen (100, 100A, 100B) aufnimmt;
eine Vielzahl von Sammelschienen (300), die die Vielzahl von Batteriezellen (100, 100A, 100B) elektrisch verbinden; und
einen ersten Schweißabschnitt (W) zum Verbinden eines ersten Elektrodenanschlusses (T1), der in jeder der Vielzahl von Batteriezellen (100, 100A, 100B) vorgesehen ist, mit der Sammelschiene (300), und einen zweiten Schweißabschnitt (W) zum Verbinden eines zweiten Elektrodenanschlusses (T2), der in jeder der Vielzahl von Batteriezellen (100, 100A, 100B) vorgesehen ist, mit der Sammelschiene (300),
wobei der erste Schweißabschnitt (W) und/oder der zweite Schweißabschnitt (W) einen Bereich umfasst, in dem eine auf der Sammelschiene (300) gebildete Laserschweißlinie (L) in einer Richtung verläuft, die einer Erstreckungsrichtung des Schweißabschnitts (W) entgegengesetzt ist,
wobei der Schweißabschnitt (W) einen Überlappungsvermeidungsbereich (P) aufweist, um einen Bereich zu verhindern, in dem die Laserschweißlinie (L), die in einem vorbestimmten Muster gebildet ist, überlappt, wobei die Laserschweißlinie (L) in dem Überlappungsvermeidungsbereich (P) eine teilweise diskontinuierliche Form aufweist, um nicht zweimal oder öfter durch denselben Punkt zu laufen.

2. Batteriepack (10, 10A, 10B) nach Anspruch 1,
wobei die Sammelschiene (300) auf dem oberen Abschnitt des Gehäuses (200) angeordnet ist und eine zum oberen Abschnitt des Gehäuses (200) freiliegende Vielzahl von Batteriezellen (100, 100A, 100B) elektrisch verbindet.

3. Batteriepack (10, 10A, 10B) nach Anspruch 1,
wobei die Sammelschiene (300) umfasst:
wenigstens einen ersten Anschlussverbindungsabschnitt (310), der mit einem ersten Elektrodenanschluss (T1) einer ersten Batteriezelle (100, 100A, 100B) der Vielzahl von Batteriezellen (100, 100A, 100B) verbunden ist; und
wenigstens einen zweiten Anschlussverbindungsabschnitt (320), der mit einem zweiten Elektrodenanschluss (T2) einer zweiten Batteriezelle (100, 100A, 100B) der Vielzahl der Batteriezellen (100, 100A, 100B) verbunden ist.

4. Batteriepack (10, 10A, 10B) nach Anspruch 3,
wobei jede der Vielzahl von Batteriezellen (100, 100A, 100B) umfasst;
eine Elektrodenbaugruppe (110);
ein Batteriegehäuse (120), das die Elektrodenbaugruppe (110) durch eine darüber gebildete Öffnung aufnimmt und elektrisch mit der Elektrodenbaugruppe (110) verbunden ist; und
eine Abdeckkappe (130), die die Öffnung verschließt und elektrisch mit der Elektrodenbaugruppe (110) verbunden ist.

5. Batteriepack (10, 10A, 10B) nach Anspruch 4,
wobei der erste Anschlussverbindungsabschnitt (310) mit der Abdeckkappe (130) gekoppelt ist, und
der zweite Anschlussverbindungsabschnitt (320) elektrisch mit dem Batteriegehäuse (120) verbunden ist.

6. Batteriepack (10, 10A, 10B) nach Anspruch 5,
wobei das Batteriegehäuse (120) umfasst:
einen durch Presspassen des Umfangs des Batteriegehäuses (120) gebildeten Sickenabschnitt (121); und
einen Crimpabschnitts (122), der oben am Sickenabschnitt (121) gebildet ist und sich dergestalt erstreckt und gebogen ist, dass er eine äußere Umfangsfläche der Abdeckkappe (130) umgibt und einen Teil einer Oberseite der Abdeckkappe (130) bedeckt.

7. Batteriepack (10, 10A, 10B) nach Anspruch 6,
wobei der zweite Anschlussverbindungsabschnitt (320) mit der Oberseite des Crimpabschnitts (122) verbunden ist.

8. Batteriepack (10, 10A, 10B) nach Anspruch 6,
wobei jede der mehreren Batteriezellen (100, 100A, 100B) eine Metallscheibe (150) umfasst, die mit der oberen Fläche des Crimpabschnitts (122) verbunden ist und eine Breite aufweist, die größer ist als die der Oberseite des Crimpabschnitts (122).

9. Batteriepack (10, 10A, 10B) nach Anspruch 8,
wobei der zweite Anschlussverbindungsabschnitt (320) mit der Metallscheibe (150) verbunden ist.

10. Batteriepack (10, 10A, 10B) nach Anspruch 3,
wobei jede der Vielzahl von Batteriezellen (100, 100A, 100B) umfasst:
eine Elektrodenbaugruppe (110);
ein Batteriegehäuse (120) mit einer darunter gebildeten Öffnung und einem geschlossenen Abschnitt (120a) an der zur Öffnung gegenüberliegenden Seite, das die Elektrodenbaugruppe (110) durch die Öffnung aufnimmt und elektrisch mit der Elektrodenbaugruppe (110) verbunden ist;
eine Abdeckkappe (130), die die Öffnung des Batteriegehäuses (120) verschließt; und
einen Zellenanschluss (170), der durch den geschlossenen Abschnitt (120a) zur Außenseite des Batteriebehälters (120) hin freiliegt und elektrisch mit der Elektrodenbaugruppe (110) verbunden ist.

11. Batteriepack (10, 10A, 10B) nach Anspruch 10,
wobei der erste Anschlussverbindungsabschnitt (310) mit dem Zellenanschluss (170) gekoppelt ist, und wobei der zweite Anschlussverbindungsabschnitt (320) mit dem geschlossenen Abschnitt (120a) gekoppelt ist.

12. Fahrzeug (V) mit dem Batteriepack (10, 10A, 10B) nach einem der Ansprüche 1 bis 11.

## Revendications

1. Bloc-batterie (10, 10A, 10B) comprenant :
une pluralité de cellules de batterie (100, 100A, 100B) ;
un boîtier (200) contenant la pluralité de cellules de batterie (100, 100A, 100B) ;
une pluralité de barres omnibus (300) connectant électriquement la pluralité de cellules de batterie (100, 100A, 100B) ; et
une première partie de soudage (W) pour le couplage d'une première borne d'électrode (T1) agencée dans chacune de la pluralité de cellules de batterie (100, 100A, 100B) à la barre omnibus (300), et une deuxième partie de soudage (W) pour le couplage d'une deuxième borne d'électrode (T2), agencée dans chacune des multiples cellules de batterie (100, 100A, 100B), à la barre omnibus (300),
au moins une de la première partie de soudage (W) et de la deuxième partie de soudage (W) comprenant une zone dans laquelle une ligne de soudage laser (L), formée sur la barre omnibus (300), se déplace dans une direction opposée à une direction d'extension de la partie de soudage (W),
la partie de soudage (W) possédant une zone de prévention du chevauchement (P) pour empêcher une zone, dans laquelle la ligne de soudage laser (L), formée selon un motif prédéterminé, est chevauchée, la ligne de soudage laser (L) possédant, dans la zone de prévention du chevauchement (P), une forme partiellement discontinue afin de ne pas passer par le même point deux fois ou davantage.

2. Bloc-batterie (10, 10A, 10B) selon la revendication 1,
la barre omnibus (300) étant disposée sur la partie supérieure du boîtier (200), et connectant électriquement une pluralité de cellules de batterie (100, 100A, 100B) exposées à la partie supérieure du boîtier (200).

3. Bloc-batterie (10, 10A, 10B) selon la revendication 1,
la barre omnibus (300) comprenant :
au moins une première partie de connexion de borne (310) couplée à une première borne d'électrode (T1) d'une première cellule de batterie (100, 100A, 100B) parmi la pluralité de cellules de batterie (100, 100A, 100B) ; et
au moins une deuxième partie de connexion de borne (320) couplée à une deuxième borne d'électrode (T2) d'une deuxième cellule de batterie (100, 100A, 100B) parmi la pluralité de cellules de batterie (100, 100A, 100B).

4. Bloc-batterie (10, 10A, 10B) selon la revendication 3,
chacune de la pluralité de cellules de batterie (100, 100A, 100B) comprenant:
un ensemble d'électrode (110) ;
un boîtier de batterie (120) recevant l'ensemble électrode (110) par une ouverture réalisée au-dessus et connecté électriquement à l'ensemble d'électrode (110) ; et
un capuchon supérieur (130) scellant l'ouverture, et connecté électriquement à l'ensemble électrode (110).

5. Bloc-batterie (10, 10A, 10B) selon la revendication 4,
la première partie de connexion de borne (310) étant couplée au capuchon supérieur (130), et
la deuxième portion de connexion de borne (320) étant couplée électriquement au boîtier de batterie (120).

6. Bloc-batterie (10, 10A, 10B) selon la revendication 5,
le boîtier de batterie (120) comprenant :
une partie de moulure (121) réalisée par l'ajustement serré de la circonférence du boîtier de la batterie (120) ; et
une partie de sertissage (122) formée sur le dessus de la partie de moulure (121), déployée et pliée de façon à entourer une surface circonférentielle extérieure du capuchon supérieur (130) et couvrir une partie d'une surface supérieure du capuchon supérieur (130).

7. Bloc-batterie (10, 10A, 10B) selon la revendication 6,
la deuxième partie de connexion de borne (320) étant couplée à la surface supérieure de la partie de sertissage (122).

8. Bloc-batterie (10, 10A, 10B) selon la revendication 6,
chacune de la pluralité de cellules de batterie (100, 100A, 100B) comprenant une rondelle métallique (150) couplée à la surface supérieure de la partie de sertissage (122), et dont la largeur est supérieure à celle de la surface supérieure de la partie de sertissage (122).

9. Bloc-batterie (10, 10A, 10B) selon la revendication 8,
la deuxième partie de connexion de borne (320) étant couplée à la rondelle métallique (150).

10. Bloc-batterie (10, 10A, 10B) selon la revendication 3,
chacune de la pluralité de cellules de batterie (100, 100A, 100B) comprenant:
un ensemble d'électrode (110) ;
un boîtier de batterie (120) possédant une ouverture formée dessous, et une partie fermée (120A) située à l'opposé de l'ouverture, recevant l'ensemble d'électrode (110) à travers l'ouverture, et connectée électriquement à l'ensemble d'électrode (110) ;
un capuchon supérieur (130) scellant l'ouverture du boîtier de batterie (120) ; et
une borne de cellule (170) exposée à l'extérieur du boîtier de batterie (120) à travers la partie fermée (120A) et connectée électriquement à l'ensemble d'électrode (110).

11. Bloc-batterie (10, 10A, 10B) selon la revendication 10,
la première partie de connexion de borne (310) étant couplée à la borne de la cellule (170), et la deuxième partie de connexion de borne (320) étant couplée à la partie fermée (120A).

12. Véhicule (V) comprenant le bloc-batterie (10, 10A, 10B) selon une quelconque des revendications 1 à 11.
